# EUROPEAN PATENT APPLICATION

(11) **EP 4 656 745 A1**
(43) Date of publication of application: **03.12.2025**
(21) Application number: 24178792.8
(22) Date of filing: 29.05.2024
(51) Int. Cl.: C22B 3/02, C22B 7/04, C22B 3/06, C22B 7/00

(54) **REACTOR FOR CONTINUOUSLY EXTRACTING METAL COMPOUNDS FROM SLAG**

(71) Applicant: AIK Technik AG, 6210 Sursee (CH)
(72) Inventor: BUCHMANN, Patrick, 6210 Sursee (CH)
(74) Representative: Maiwald GmbH

(57) **Abstract**

The present invention relates to a reactor for continuously extracting metal compounds from slag comprising
• a housing (101) comprising a front wall (102) and a back wall (103);
• a washing drum (140) being situated inside the housing (100) and rotatably mounted outside the housing (100);
• an acidic liquid situated inside the housing (100), so that a lower part of the washing drum (140) is immersed in the acidic liquid;
• an inlet (110) for introducing a slag stream from outside of the housing (100) into the interior of the washing drum (140); and
• an outlet (101) for removing the slag stream from the interior of the washing drum (140) to the outside of the housing (100); and
• means (120) for rotating the washing drum (140) situated outside the housing (100),
wherein the parts of the reactor, which are in contact with the slag stream are prepared from non-corrosive and abrasion resistant material, such as polymeric material.

## Description

The present invention relates to a reactor for continuously extracting metal compounds from slag, wherein a washing drum being situated inside the housing and rotatably mounted outside the housing and the parts of the reactor, which are in contact with the slag stream are prepared from non-corrosive and abrasion resistant material, such as polymeric material.

### Technical background

Slag, also called bottom ash, from incineration processes such as waste incineration or sewage sludge incineration are usually disposed inland filling or to a lesser extent used as additive for cement and concrete in construction industry and road construction.

Due to higher environmental constrains especially in Europe but also increasingly in other countries around the world bottom ash underlies governmental regulations especially regarding the content of potentially environmentally harmful components such as heavy metal compounds.

Therefore, in order to recycle bottom ash to the economy (circular economy) the bottom ash must be treated in order to reduce the amount of said potentially environmentally harmful.

Additionally, bottom ash contains high amounts of other valuable compounds such as metals, like iron, aluminium, copper, and other non-ferrous metals and heavy metals, which can be recycled so that the environmental damages of their primary production in mining and smelting can be significantly reduced. Additionally, the dependence on import of metals from primary production in unstable word regions can be reduced.

By recycling metals from bottom ashes it is also possible to significantly reduce the amount of material to be disposed in land filling.

Overall recycling metals from bottom ashes reduces the loss of resources and environmental damages and increases supply security.

Generally, methods for recovering metals from mixed materials involve the extraction of metal compounds by solving the metal compounds in acidic liquids.

In industrial extraction processes the mixed materials are usually introduced into an extraction reactor, such as a leaching reactor, in which the mixed materials are brought into contact with an acidic liquid.

In some embodiments as e.g. described in US 2018/312 985 A1 the mixed materials are introduced into a rotatable container, which is placed into a vessel, which contains an acidic liquid. By rotating the container in said acidic liquid it is ensured that the mixed materials in the container are brought into contact with the acidic liquid and the metal compounds comprised in the mixed materials brought in solution. The solved metal compounds can then be separated from the residual particulate material of the mixed material and further processed to obtain the metals and metal compounds.

The industrial processes of the state of the art have the drawback that they can only be run in batch mode. This means that the rotatable container is filled with the mixed materials outside of the vessel, which contains the acidic liquid and then put into said vessel in which it is rotated. After solving the metal compounds out of the mixed materials, the container is again withdrawn from the vessel and the liquid in the vessel, which includes the solved metal compounds are further processed.

A continuous process in which continuously mixed materials are introduced and withdrawn from a reactor and brought into contact with an acidic liquid would have the technical benefits of maintaining the mixed materials and the acidic liquid in closed housings, which reduces the risks of contamination or environmental hazards, of reduced operational efforts, as the container does not need to be positioned into the vessel and removed from the vessel, and a more defined and controllable extraction process, which is based on the residence time of the mixed materials in the reactor.

A continuous reactor, however, has several severe drawbacks in behalf of poor abrasion resistance and high corrosion as the reactor is in continuous contact with the acidic liquid and the mixed material. A continuous reactor thus has a higher need for maintenance work, in which parts of the reactor need to be repaired or exchanged and therefore increased downtime, which results in higher operational costs.

Thus, there is a need for a reactor for extracting metal compounds from slag, which can be run in continuous mode and avoids the drawbacks of poor abrasion resistance and high corrosion thereby reducing the maintenance work and downtime.

This object is surprisingly solved by a reactor for continuously extracting metal compounds from slag, wherein a washing drum being situated inside the housing and rotatably mounted outside the housing and the parts of the reactor, which are in contact with the slag stream are prepared from non-corrosive and abrasion resistant material, such as polymeric material.

### Summary of the invention

The present invention relates to a reactor for continuously extracting metal compounds from slag comprising
- a housing (101) comprising a front wall (102) and a back wall (103);
- a washing drum (140) being situated inside the housing (100) and rotatably mounted outside the housing (100);
- an acidic liquid situated inside the housing (100), so that a lower part of the washing drum (140) is immersed in the acidic liquid;
- an inlet (110) for introducing a slag stream from outside of the housing (100) into the interior of the washing drum (140); and
- an outlet (101) for removing the slag stream from the interior of the washing drum (140) to the outside of the housing (100); and
- means (120) for rotating the washing drum (140) situated outside the housing (100),
wherein the surfaces of the reactor, which are in contact with the slag stream are prepared from non-corrosive and abrasion resistant material, such as polymeric material.

Further, the present invention relates to the use of the reactor as described above or below for extracting metal compounds from slag.

### Brief Description of the Figures

Fig 1 shows a schematic drawing of the closed housing of the reactor.
Fig 2 shows a schematic drawing of the housing of the reactor in which the upper part of the housing is lifted showing the washing drum situated inside the housing.
Fig 3 shows a schematic drawing of the washing drum.
Fig. 4 shows a schematic drawing of the washing drum including the solid wall parts.
Fig. 5 shows a schematic drawing of the washing drum including the means for removably attaching the sieve plates to the cylindrical frame.
Fig 6 shows a schematic drawing of the cylindrical frame of the washing drum including a sieve plate, which is removably attached to the cylindrical frame.
Fig 7 shows exemplary means for sealing the inlet for the slag stream on the side of the inlet pipe.
Fig 8 shows exemplary means for sealing the inlet for the slag stream on the side of the upper part of the housing.

### Detailed Description of the Invention

The present invention relates to a reactor for continuously extracting metal compounds from slag comprising
- a housing (101) comprising a front wall (102) and a back wall (103);
- a washing drum (140) being situated inside the housing (100) and rotatably mounted outside the housing (100);
- an acidic liquid situated inside the housing (100), so that a lower part of the washing drum (140) is immersed in the acidic liquid;
- an inlet (110) for introducing a slag stream from outside of the housing (100) into the interior of the washing drum (140); and
- an outlet (101) for removing the slag stream from the interior of the washing drum (140) to the outside of the housing (100); and
- means (120) for rotating the washing drum (140) situated outside the housing (100),
wherein the surfaces of the reactor, which are in contact with the slag stream are prepared from non-corrosive and abrasion resistant material, such as polymeric material.

Suitable polymeric material is independently selected from e.g. polyolefin, such as polypropylene or polyethylene, or polyamide. The polymeric material of the surfaces of the reactor, which are in contact with the slag stream, is preferably selected depending on the needs regarding mechanical forces applied on the different parts of the reactor, the need for abrasion resistance and corrosion resistance.

The polymeric material in one embodiment can be reinforced with filler material, such as fibers, preferably glass fibers, such as glass fiber reinforced polypropylene or glass fiber reinforced polyamide.

The housing preferably has dimensions in width in the range of from 1.0 to 8.0 m, preferably 2.0 to 5.0 m, more preferably 2.5 to 4.0 m, in length of 1.5 to 10 m, preferably 2.5 to 8.0 m, more preferably 3.5 to 5.0 m and in height of 1.0 to 8.0 m, preferably 2.0 to 5.0 m, more preferably 2.5 to 4.0 m.

The width and height of the housing are preferably comparable, more preferably the same.

The length of the housing is preferably greater than the width and height of the housing, preferably in the range of from 50 to 200 cm, more preferably from 75 to 150 cm.

The housing is preferably a closed housing with a bottom wall, a top wall and sidewalls including the front wall and the back wall.

The housing preferably has a generally rectangular shape with a bottom wall, a top wall and four sidewalls.

The front wall preferably comprises an opening for the inlet for introducing a slag stream from outside of the housing into the interior of the washing drum.

The opening is preferably situated in the center area of the circular front wall.

The back wall preferably comprises an opening for the outlet for removing the slag stream from the interior of the washing drum to the outside of the housing.

The opening is preferably situated in the center area, more preferably in the center of the circular back wall.

The front wall and the back wall are preferably on opposing sides of the housing.

It is preferred that the housing is prepared from non-corrosive and abrasion resistant material, such as polymeric material. Suitable polymeric material is e.g. polyolefin, such as polypropylene or polyethylene, preferably polypropylene, or polyamide. The polypropylene in one embodiment can be reinforced with filler material, such as fibers, preferably glass fibers, such as glass fiber reinforced polypropylene or glass fiber reinforced polyamide.

The housing preferably has a lower part and an upper part, which can be separated. "Lower" and "upper" in this connection means in the height dimension, i.e. in relative distance to the floor.

The upper part of the housing preferably comprises means for removing the upper part of the housing such as eyelets or anchor points which can be used for removing the upper part of the housing e.g. by means of a crane, like an indoor crane.

The housing can be situated in a frame, such as a metal frame, like a steel frame.

The frame can be removably attached to the bottom wall of the housing.

The frame can further comprise side parts, which encase the lower part of the housing and which preferably comprising mounting sides for mounting washing drum and/or the inlet for introducing a slag stream from outside of the housing into the interior of the washing drum and/or the outlet for removing the slag stream from the interior of the washing drum to the outside of the housing and/or the means for rotating the washing drum situated outside the housing.

The side parts are preferably situated on opposing sides of the frame, more preferably on the sides, which face the front wall and the back wall of the housing.

A washing drum is situated inside the housing.

The washing drum preferably has a generally cylindrical shape with generally circular front and back bases, and a generally cylindrical frame.

The washing drum is preferably situated within the housing as such that the circular front and back bases are faced towards the one or more side walls of the housing, preferably towards two opposite side walls of the housing, more preferably the front wall and the back wall of the housing.

The circular front base preferably comprises an opening, preferably a generally circular opening for the inlet for introducing a slag stream from outside of the housing into the interior of the washing drum.

The opening is preferably situated in the center area, more preferably in the center of the circular front base.

Further, the circular back base preferably comprises an opening, preferably a generally circular opening for the outlet for removing the slag stream from the interior of the washing drum to the outside of the housing.

The opening is preferably situated in the center area, more preferably in the center of the circular back base.

The circular front and back bases preferably have comparable, more preferably the same dimensions.

The diameter of the front and back bases is preferably from 10 to 75 cm, preferably 20 to 50 cm less than the width and or height of the housing.

The generally cylindrical frame is preferably situated within the housing over the length of the housing.

It is preferred that the generally cylindrical frame comprises a plurality of poles of the same dimensions which are attached, preferably welded to the circular front and back bases of the washing drum and form a generally cylindrical shape.

The plurality of poles are preferably situated as such that the open spaces between the poles is comparable, preferably the same.

The length of the generally cylindrical frame is preferably from 10 to 75 cm, preferably 20 to 50 cm less than the length of the housing.

The circular front and back bases and the circular frame are preferably fully covered with cover material, which is prepared from non-corrosive and abrasion resistant material, such as polymeric material. The cover material is preferably removably attached to the circular front and back bases and the circular frame.

It is preferred that no surfaces of the washing drum, such as the surfaces of the circular front and back bases and the circular frame, are in contact with the slag stream. As a consequence the washing drum, such as the circular front and back bases and the circular frame, can be prepared from any kind of material suitable for washing drums in leaching reactors.

The main criteria for the materials of the washing drum are mechanical properties.

Thus, the washing drum, such as the circular front and back bases and the circular frame, are preferably prepared from metal, more preferably from corrosion resistant metal, still more preferably from stainless steel.

The washing drum is mounted outside the housing as such that can be rotated within the housing.

It is preferred that the washing drum is mounted on the frame, preferably the side parts of the frame, more preferably the mounting sides for mounting the washing drum.

The washing drum is preferably mounted as such that a lower part of the circular frame of the washing drum is immersed in the acidic liquid, whereas the upper part of the washing drum is above the level of acidic fluid in the housing. "Lower" and "upper" in this connection means in the height dimension, i.e. in relative distance to the floor.

Upon rotation of the washing drum the upper and lower part of the washing drum certainly shift so that during rotation all parts of the washing drum are immersed in the acidic liquid at given times.

The circular front and back bases of the washing drum are preferably covered by solid wall parts. The solid wall parts preferably have the form of a generally circular sector. As a consequence by situating a plurality of solid wall parts, such as two to ten, preferably three or four solid wall parts each on the circular front and back bases the surfaces of the circular front and back bases are preferably fully covered by the solid wall parts. The solid wall parts are preferably prepared from non-corrosive and abrasion resistant material, such as polymeric material.

Suitable polymeric material is e.g. polyolefin, such as polypropylene or polyethylene, preferably polyethylene, or polyamide.

The solid wall parts are preferably removably attached to the circular front and back bases.

The means for attaching the solid wall parts to the circular front and back bases, such as screws, bolts, clips, plug connections, such as slot and key, or others, are preferably prepared from non-corrosive and abrasion resistant material, such as polymeric material.

Suitable polymeric material is e.g. polyolefin, such as polypropylene or polyethylene, preferably polyethylene, or polyamide.

The generally cylindrical frame of the washing drum is preferably covered by a plurality of the sieve plates.

The sieve plates preferably have a dimension that the open spaces between the poles of the generally cylindrical frame are fully covered by the sieve plates.

The sieve plates preferably have a plurality of openings to allow the acidic fluid to pass into the washing drum or out of the washing drum.

The openings should have a dimension, which is small enough that the particles of the slag stream cannot pass from the inside of the washing drum to the outside of the washing drum.

The sieve plates are preferably prepared from non-corrosive and abrasion resistant material, such as polymeric material.

Suitable polymeric material is e.g. polyolefin, such as polypropylene or polyethylene, preferably polyethylene, or polyamide.

The sieve plates are preferably removably attached to the generally cylindrical frame, more preferably the poles of the generally cylindrical frame.

The means for attaching the sieve plates to the generally cylindrical frame, more preferably the poles of the generally cylindrical frame, such as screws, bolts, clips, plug connections or others, are preferably prepared from non-corrosive and abrasion resistant material, such as polymeric material.

Suitable polymeric material is e.g. polyolefin, such as polypropylene or polyethylene, preferably polyethylene, or polyamide.

In one preferred embodiment means for attaching the sieve plates to the generally cylindrical frame, more preferably the poles of the generally cylindrical frame are plug connections such as holding rails. The holding rails are preferably removably attached to each pole of the generally cylindrical frame e.g. by means of clips. The holding rails preferably have a slot on both sides of the rail. A sieve plate can then be slid into two slots of two holding rails from either the circular front base or the circular back base of the washing drum.

The sidewalls of the housing preferably comprise one or more, such as one to four, preferably two to four closable openings.

These openings are suitable for exchanging removable parts of the washing drum, such as solid wall parts for covering the front and back bases of the washing drum, and a plurality of sieve plates for covering the surface of the cylindrical frame of the washing drum.

It is preferred that the closable openings are situated at least in the front wall and the back wall of the housing. The closable opening(s) can additional be situated in one or more of the other sidewalls of the housing.

In one embodiment a closable opening is situated in each sidewall of the housing.

By being able to exchange removable parts of the washing drum through the closable openings in the housing it is not necessary to remove the upper part of the housing for routine maintenance work, such as exchanging single sieve plates or parts of the solid wall parts. Instead the parts in need of exchange, e.g. due to abrasion, can be exchanged through these closable openings. As a consequence maintenance time and costs can be reduced.

The acidic liquid situated inside the housing is preferably an aqueous liquid comprising an acid preferably selected from HF, HCl, H₂SO₄, HNO₃, H₃PO₄ or mixtures thereof. The acidic liquid thereby can be acidic wastewater, which is recycled from a different washing step of the incineration process, such as e.g. the acidic scrubber wastewater, which is recycled from the wet flue gas cleaning.

The reactor preferably further comprises an inlet for introducing the acidic liquid into the housing. The inlet is preferably situated at the lower part of the housing.

Additionally, the reactor preferably comprises an outlet for removing the acidic liquid from the housing. The outlet is preferably situated at the lower part of the housing.

The reactor comprises an inlet for introducing a slag stream from outside of the housing into the interior of the washing drum.

The inlet is preferably situated in one of the sidewalls of the housing, preferably the front wall of the housing.

It is preferred that the inlet is situated in the center area of the sidewall, preferably the front wall of the housing.

It is preferred that the inlet is mounted on the frame, preferably the side parts of the frame, more preferably the mounting sides for mounting the inlet.

The inlet preferably includes an opening, preferably a generally circular opening in the sidewall, preferably the front wall of the housing, and an opening, preferably a generally opening in the circular front base of the washing drum.

The openings are preferably at the same height in relation to the floor.

Thereby, in one embodiment the opening, preferably the generally circular opening in the sidewall, preferably the front wall of the housing, has a greater diameter than the opening, preferably the generally opening in the circular front base of the washing drum. In said embodiment, the opening, preferably the generally opening in the circular front base of the washing drum includes an outer attachment, such as a drum, which is pushed through the opening, preferably the generally circular opening in the sidewall, preferably the front wall of the housing.

The outer attachment, preferably the drum is preferably mounted on the frame, preferably the side parts of the frame, more preferably the mounting sides for mounting the inlet.

The outer surface of the outer attachment, preferably the drum is lined with a sealing, such as a brush sealing.

Further, the inner surface of the opening, preferably the generally circular opening in the sidewall, preferably the front wall of the housing is lined with a sealing, such as a brush sealing.

The sealings are preferably prepared from non-corrosive and abrasion resistant material, such as polymeric material. Suitable polymeric material is e.g. polyolefin, such as polypropylene or polyethylene, preferably polypropylene, or polyamide.

The inlet is preferably removably attached to a feeding line, such as a pipe, with which the slug stream is fed to the inlet and into the washing drum.

The means for removably attaching the inlet to the feeding line can be any suitable means such as screws, bolts, clips, plug connections.

The inlet is preferably mounted on the frame, preferably the side parts of the frame, more preferably the mounting sides for mounting the inlet.

The inner surface of the inlet is preferably fully covered with a lining prepared from non-corrosive and abrasion resistant material, such as polymeric material. Suitable polymeric material is e.g. polyolefin, such as polypropylene or polyethylene, preferably polypropylene, or polyamide

The reactor further comprises an outlet for removing the slag stream from the interior of the washing drum to the outside of the housing.

The outlet is preferably situated in one of the sidewalls of the housing, preferably the back wall of the housing.

It is preferred that the outlet is situated in the center area of the sidewall, preferably the back wall of the housing.

It is preferred that the outlet is mounted on the frame, preferably the side parts of the frame, more preferably the mounting sides for mounting the outlet.

The outlet preferably includes an opening, preferably a generally circular opening in the sidewall, preferably the back wall of the housing, and an opening, preferably a generally opening in the circular back base of the washing drum.

The openings are preferably at the same height in relation to the floor.

Thereby, in one embodiment the opening, preferably the generally circular opening in the sidewall, preferably the back wall of the housing, has a greater diameter than the opening, preferably the generally opening in the circular back base of the washing drum. In said embodiment, the opening, preferably the generally opening in the circular back base of the washing drum includes an outer attachment, such as a drum, which is pushed through the opening, preferably the generally circular opening in the sidewall, preferably the back wall of the housing.

The outer attachment, preferably the drum is preferably mounted on the frame, preferably the side parts of the frame, more preferably the mounting sides for mounting the outlet.

The outer surface of the outer attachment, preferably the drum is lined with a sealing, such as a brush sealing.

Further, the inner surface of the opening, preferably the generally circular opening in the sidewall, preferably the back wall of the housing is lined with a sealing, such as a brush sealing.

The sealings are preferably prepared from non-corrosive and abrasion resistant material, such as polymeric material. Suitable polymeric material is e.g. polyolefin, such as polypropylene or polyethylene, preferably polypropylene, or polyamide.

The outlet is preferably removably attached to a removing line, such as a pipe, with which the slug stream is removed from the washing drum through the outlet.

The means for removably attaching the outlet to the removing line can be any suitable means such as screws, bolts, clips, plug connections.

The outlet is preferably mounted on the frame, preferably the side parts of the frame, more preferably the mounting sides for mounting the outlet.

The inner surface of the outlet is preferably fully covered with a lining prepared from non-corrosive and abrasion resistant material, such as polymeric material. Suitable polymeric material is e.g. polyolefin, such as polypropylene or polyethylene, preferably polypropylene, or polyamide.

It is preferred that the inlet and the outlet are situated on opposite sidewalls of the housing.

The reactor further comprises means for rotating the washing drum situated outside the housing.

The means for rotating the washing drum are preferably situated in close spatial proximity to the inlet for introducing a slag stream from outside of the housing into the interior of the washing drum.

It is preferred that the means for rotating the washing drum is mounted on the frame, preferably the side parts of the frame, more preferably the mounting sides for mounting the inlet.

The means for rotating the washing drum is preferably a motor for rotating the washing drum, preferably an electric motor for rotating the washing drum, such as a motor for a drum drive.

The reactor can further comprise means for removing the slag stream through the outlet for removing the slag stream from the interior of the washing drum to the outside of the housing.

The means for removing the slag stream through the outlet for removing the slag stream from the interior of the washing drum to the outside of the housing is preferably situated in close spatial proximity to the outlet for removing the slag stream from the interior of the washing drum to the outside of the housing.

It is preferred that the means for removing the slag stream through the outlet for removing the slag stream from the interior of the washing drum to the outside of the housing is mounted on the frame, preferably the side parts of the frame, more preferably the mounting sides for mounting the outlet.

For symmetry reasons the reactor can further comprise means for removing the slag stream through the outlet for removing the slag stream from the interior of the washing drum to the outside of the housing, which is situated in close spatial proximity to the inlet for introducing a slag stream from outside of the housing into the interior of the washing drum.

It is preferred that the means for rotating the washing drum is mounted on the frame, preferably the side parts of the frame, more preferably the mounting sides for mounting the inlet.

The one or two means for removing the slag stream through the outlet for removing the slag stream from the interior of the washing drum to the outside of the housing is preferably one or two vibration motor(s).

The reactor as described above is preferably suitable a leaching reactor for continuously extracting metal compounds from slag.

In continuous mode a slag stream is preferably continuously introduced into the washing drum, situated in the housing through the inlet for introducing a slag stream from outside of the housing (100) into the interior of the washing drum.

The washing drum is preferably continuously rotated within the housing by the means for rotating the washing drum so that the slag particles from the slag stream are continuously tumbled inside the rotating washing drum and brought into intimate contact with the acidic liquid. When being brought into contact with the acidic liquid the metal compounds in the slag particles chemically react with the acid in the acidic liquid and are solved in the acidic liquid.

The slag stream continuously removed from the interior of the washing drum through the outlet for removing the slag stream from the interior of the washing drum to the outside of the housing by the means for removing the slag stream through the outlet for removing the slag stream from the interior of the washing drum to the outside of the housing.

It is preferred that the flow rate of slag stream that is introduced into the washing drum is the same as the flow rate of the slag stream that is removed from the washing drum so that a constant amount of slag is maintained in the washing drum during operation of the reactor.

The average residence time of the slag stream within the washing drum is usually in the range of from 5 min to 300 min, preferably from 10 min to 200 min, more preferably from 15 min to 150 min and most preferably from 30 min to 120 min.

The acidic liquid is preferably continuously introduced into the lower part of the housing through the inlet for inlet for introducing the acidic liquid into the housing.

Additionally, the acidic liquid is preferably continuously removed from the lower part of the housing through the outlet for removing the acidic liquid from the housing.

The inlet stream for introducing the acidic liquid into the housing usually has a continuous flow rate of 5 to 75 m³/h, preferably 10 to 60 m³/h, more preferably 20 to 50 m³/h.

The outlet stream for removing the acidic liquid from the housing usually has a continuous flow rate of 5 to 75 m³/h, preferably 10 to 60 m³/h, more preferably 20 to 50 m³/h.

The continuous flow rates of the inlet stream and the outlet stream are preferably the same so that a constant amount of acidic liquid is maintained in the housing during operation of the reactor.

### Detailed Description of the Figures

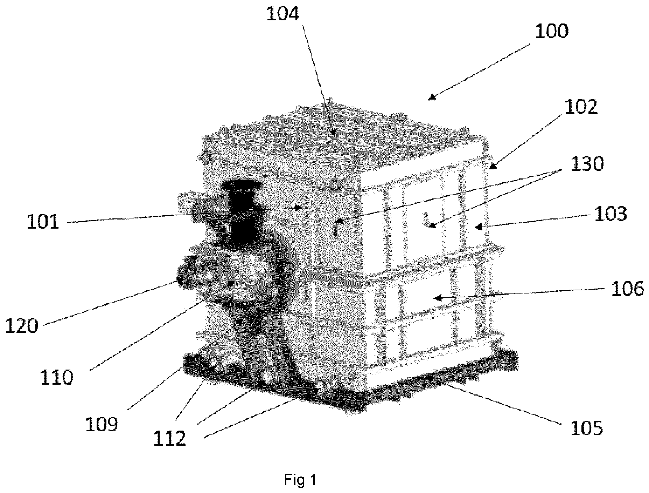

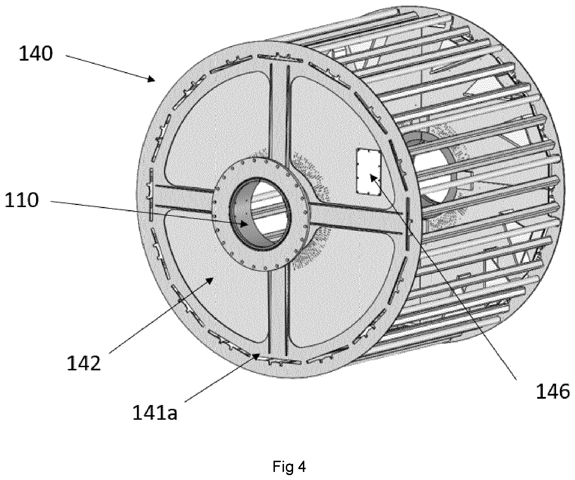

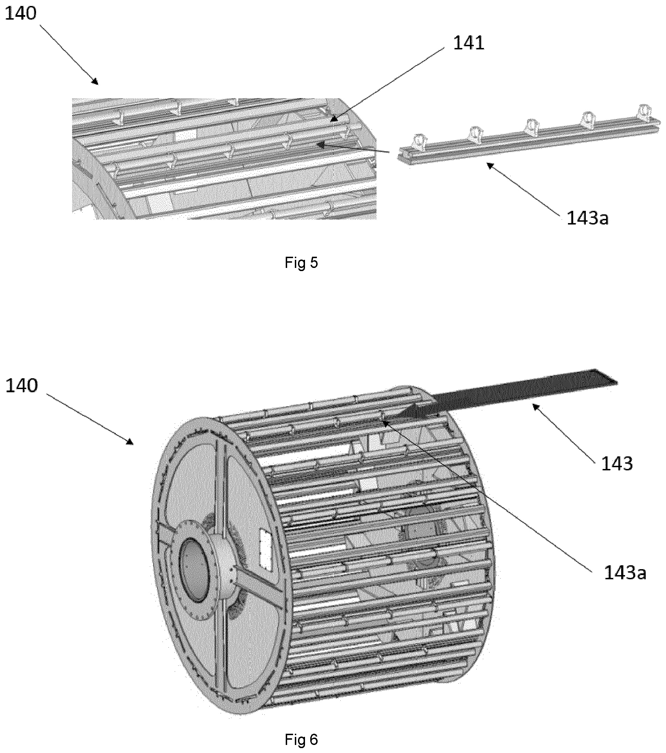

In the following the reactor of the invention is further illustrated by means of the exemplary drawings of Fig. 1-8

### Reference signs

- 100: housing
- 101: front wall
- 102: back wall
- 103: side wall(s)
- 104: top wall
- 105: bottom wall
- 106: lower part of the housing
- 107: upper part of the housing
- 108: means for removing upper part of the housing
- 109: frame
- 110: inlet for slag stream
- 111: outlet for slag stream
- 112: inlet for acidic liquid
- 113: outlet for acidic liquid
- 120: means for rotating washing drum
- 130: closable openings in housing
- 140: washing drum
- 141: cylindrical frame
- 141a: circular front base
- 141b: circular back base
- 142: solid wall parts
- 143: sieve plates
- 144: opening in the front base
- 145: opening in the back base
- 146: closable opening in solid wall parts
- 150: means for sealing the inlet/outlet to the inlet/outlet for the slag stream
- 151: means for securing the means for sealing the inlet/outlet on the side of the inlet/outlet pipe
- 160: means for sealing the washing drum to the opening in the front/back wall
- 170: means for removing the slag stream from the interior of the washing drum to the outside of the housing

Fig. 1 shows a schematic drawing of an embodiment of the closed housing of the reactor.

The housing (100) has a closed rectangular shape with four sidewalls (103) including a front wall (101) and a back wall (102) opposite of the front wall (101), a top wall (104) and a bottom wall (105). Housing is usually prepared from non-corrosive and abrasion resistant material, such as polymeric material.

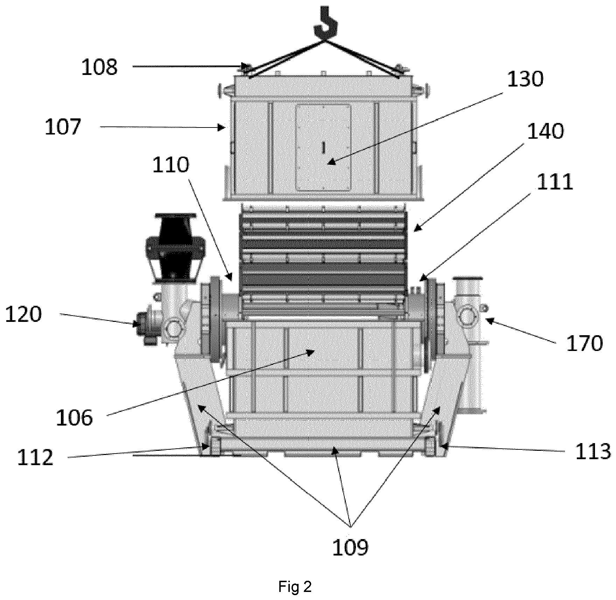

The bottom wall (105) is situated on a metal frame, such as steel frame (109). The metal frame comprises a side part, which extends to the center area of the front wall (101) and to the center area of the back wall (102) (shown in Fig 2).

The side part of the metal frame comprises on each side mounting sites for the inlet for slag stream (110) and the outlet for the slag stream (111). Additionally, the means for rotating the washing drum (120), preferably an electric motor for rotating the washing drum (120), is mounted on the mounting sites for the inlet for slag stream (110).

The housing further comprises an inlet for the acidic liquid (112) and an outlet for the acidic liquid (113) in the lower part of the housing (106).

In the front wall (101) and one of the side walls (102) two closable openings (130) are situated, which can be used for exchanging removable parts of the washing drum (140) situated within the housing (100).

In Fig 2 the schematic drawing of an embodiment of the closed housing of the reactor, in which the upper part of the housing (107) is lifted is shown.

Thereby, the washing drum (140) situated within the housing (100) is shown.

On the back wall (102) the outlet for the slag stream (111) is situated in the center area of the back wall (102).

Means (170) for removing the slag stream through the outlet (111) for removing the slag stream from the interior of the washing drum (140) to the outside of the housing (100), such as a vibration motor, is mounted on the mounting sites for the outlet for slag stream (111).

For lifting the upper part of the housing (107) means (108) for removing the upper part of the housing are situated on the top wall (104).

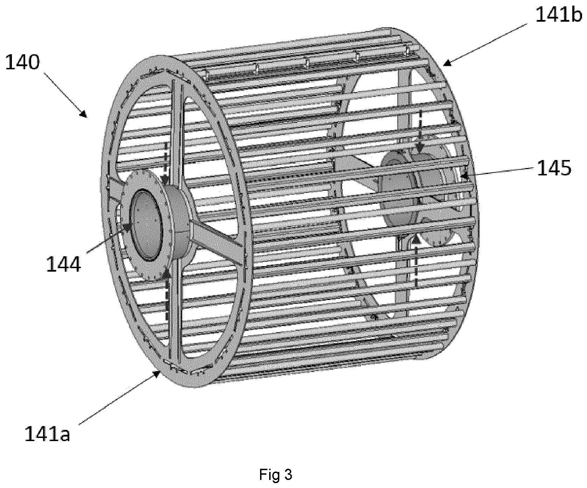

Fig 3-5 show schematic drawings of an embodiment of the washing drum (140).

The washing drum (140) comprises a generally circular front base (141a), a generally circular back base (141b) and the cylindrical frame (141), which form the frame for the washing drum (140) in a generally cylindrical shape. The generally circular front base (141a) and the generally circular back base (141b) are made from metal and the cylindrical frame (141) is made from metal poles, which are welded to the generally circular front base (141a) and the generally circular back base (141b).

The generally circular front base (141a) includes an opening (144) in its center area, which is formed as an outer attachment, such as a drum.

The outer attachment, preferably the drum, is preferably mounted on the side parts of the frame (109) (not shown).

The inner surface of the opening (144) is lined with a non-corrosive and abrasion resistant material, such as polymeric material.

The generally circular backbase (141b) includes an opening (145) in its center area, which is formed as an outer attachment, such as a drum.

The outer attachment, preferably the drum, is preferably mounted on the side parts of the frame (109) (not shown).

The inner surface of the opening (145) is lined with a non-corrosive and abrasion resistant material, such as polymeric material.

Solid side parts (142) are removably attached to the inner surface of the generally circular front base (141a) and the generally circular backbase (141b).

One of the solid side parts includes a closable opening (146), which can be used for exchanging removable parts of the inside of the washing drum (140).

means for attaching the sieve plates to the generally cylindrical frame (143a), such as holding rails, are removably attached to the poles of the generally cylindrical frame (141) e.g. by means of clips.

Sieve plates (143) removably attached to the poles of the generally cylindrical frame (141) by sliding the sieve plates into two slots of two adjacent holding rails (143a).

The solid side parts (142), the sieve plates (143) and the means for attaching the sieve plates to the generally cylindrical frame (143a) are all prepared from non-corrosive and abrasion resistant material, such as polymeric material.

The solid side parts (142), the sieve plates (143) and the means for attaching the sieve plates to the generally cylindrical frame (143a) are attached to the accordant parts of the washing drum (140) so that the total inner surface of the washing drum is lined with the non-corrosive and abrasion resistant material of the solid side parts (142) and the sieve plates (143).

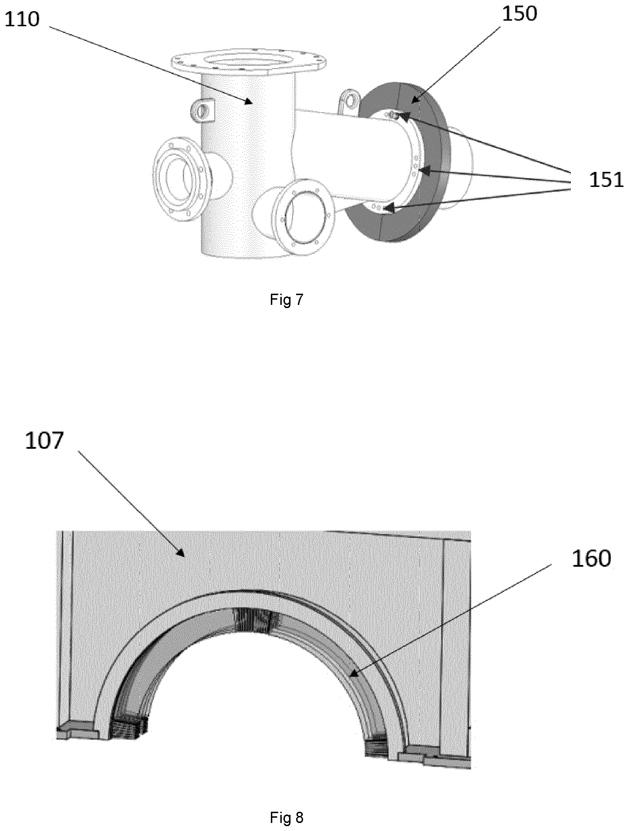

Fig 7 shows exemplary means for sealing (150) the inlet for the slag stream on the side of the inlet pipe (110).

The means for sealing (150) is preferably adapted the means for sealing (160) the washing drum to the opening in the front/back wall as such that the two means for sealing (150) and (160) provide a leakproof combined sealing for avoiding leaks of potentially corrosive material through the opening for the inlet in the housing (100) and is preferably removably attached to the outer surface of the inlet pipe (110).

The means for sealing (150) are preferably prepared from non-corrosive and abrasion resistant material, such as polymeric material.

The means for sealing are attached to outer surface of the inlet pipe (110) by means for securing the means for sealing the inlet on the side of the inlet pipe(151), preferably screws which are preferably prepared from non-corrosive and abrasion resistant material, such as polymeric material.

A corresponding sealing can be removably attached to outer surface of the outlet pipe (111) (not shown).

Fig 8 shows exemplary means for sealing (160) the washing drum to the opening in the front or back wall for the slag stream on the side of the upper part of the housing (107). The means for sealing (160) is preferably adapted to the means for sealing (150) as discussed above and is preferably removably attached to the opening for the slag stream on the side of the upper part of the housing (107).

The means for sealing (160) are preferably prepared from non-corrosive and abrasion resistant material, such as polymeric material.

A corresponding sealing can be removably attached to the opening for the slag stream on the side of the lower part of the housing (106) (not shown).

The sealing can be used for the inlet opening situated at the front wall (101) of the housing (100) and the outlet opening situated at the back wall (102) of the housing (100).

## Claims

1. A reactor for continuously extracting metal compounds from slag comprising
• a housing (100) comprising a front wall (101) and a back wall (102);
• a washing drum (140) being situated inside the housing (100) and rotatably mounted outside the housing;
• an acidic liquid situated inside the housing (100), so that a lower part of the washing drum (140) is immersed in the acidic liquid;
• an inlet (110) for introducing a slag stream from outside of the housing (100) into the interior of the washing drum (140); and
• an outlet (111) for removing the slag stream from the interior of the washing drum (140) to the outside of the housing (100); and
• means (120) for rotating the washing drum (140) situated outside the housing (100),
wherein the surfaces of the reactor, which are in contact with the slag stream are prepared from non-corrosive and abrasion resistant material, such as polymeric material.

2. The reactor according to claim 1, wherein the housing (100) has a generally rectangular shape with a bottom wall (105), a top wall (104) and four side walls (101, 102, 103).

3. The reactor according to claims 1 or 2, wherein the washing drum (140) has a generally cylindrical shape with generally circular front and back bases (141a, 141b), which is situated within the housing (100) as such that the circular front and back bases (141a, 141b) are faced towards the one or more side walls (101, 102, 103) of the housing (100), preferably towards two opposite side walls (101, 102) of the housing (100).

4. The reactor according to claim 3, wherein the inlet (110) for introducing the slag stream and the outlet (102) for removing the slag stream are situated in the one or more front and back walls (101, 102), preferably the two opposite front and back walls (101, 102), of the housing and the generally circular front and back bases (141a, 141b) of the washing drum (140) of generally cylindrical shape.

5. The reactor according to any of the preceding claims, wherein the washing drum (140) comprises a generally cylindrical frame (141), solid wall parts (142) for covering the front and back bases (141a, 141b) of the washing drum (140), and a plurality of sieve plates (143) for covering the surface of the cylindrical frame (141) of the washing drum (140).

6. The reactor according to claim 5, wherein the solid wall parts (142) and the plurality of sieve plates (143) are removably attached to the generally cylindrical frame (141).

7. The reactor according to claims 5 or 6, wherein the generally cylindrical frame (141) is prepared from metallic material and/or the solid wall parts (142) and the plurality of sieve plates (143) are prepared from non-corrosive and abrasion resistant material, such as polymeric material.

8. The reactor according to any of the preceding claims, wherein the inner surface (144) of the inlet (110) for introducing the slag stream and the inner surface (145) of the outlet (111) for removing the slag stream are lined with non-corrosive and abrasion resistant material, such as polymeric material.

9. The reactor according to any of the preceding claims, wherein all surfaces of the reactor, which are in direct contact with the slag stream are lined with non-corrosive and abrasion resistant material, such as polymeric material.

10. The reactor according to any of the preceding claims, wherein the means (120) for rotating the washing drum (140) is a motor for rotating the washing drum (140).

11. The reactor according to any of the preceding claims further comprising means (170) for removing the slag stream through the outlet (111) for removing the slag stream from the interior of the washing drum (140) to the outside of the housing (100), such as a vibration motor.

12. The reactor according to any of the preceding claims further comprising a closable opening (130) in at least one sidewall (101, 102, 103) of the housing (100) for exchanging removable parts of the washing drum (140), such as solid wall parts (142) for covering the front and back bases (141a, 141b) of the washing drum (140), and a plurality of sieve plates (143) for covering the surface of the cylindrical frame (141) of the washing drum (140).

13. Use of the reactor according to any one of the preceding claims for extracting metal compounds from slag.
